# NOUVEAU FASCICULE DE BREVET EUROPEEN

(11) **EP 2 370 359 B2**
(45) Date de publication et mention de la décision concernant l'opposition: **18.05.2022**
(45) Mention de la délivrance du brevet: 07.02.2018
(21) Numéro de dépôt: 09805783.9
(22) Date de dépôt: 22.12.2009
(51) Int. Cl.: C01B 39/24, C01B 39/02, B01J 29/08, B01J 37/00, B01J 29/12, C10G 47/16

(54) **ZEOLITES Y MODIFIEES A STRUCTURE INTRACRISTALLINE TRIMODALE, LEUR PROCEDE DE FABRICATION ET LEUR UTILISATION**
MODIFIZIERTE ZEOLITHE VOM Y-TYP MIT TRIMODALER INTRAKRISTALLINER STRUKTUR, HERSTELLUNGSVERFAHREN DAFÜR UND VERWENDUNG DAVON
MODIFIED Y-TYPE ZEOLITES HAVING A TRIMODAL INTRACRYSTALLINE STRUCTURE, METHOD FOR MAKING SAME, AND USE THEREOF

(30) Priorité: 22.12.2008 FR 0858952
(43) Date de publication de la demande: 05.10.2011
(73) Titulaire: Total Raffinage France, 92400 Courbevoie (FR); Centre National de la Recherche Scientifique, 75016 Paris (FR)
(72) Inventeur: VAN DONK, Sander, 76310 Sainte-Adresse (FR); LACROIX, Maxime, B-1180 Uccle (BE); KENMOGNE-GATCHUISSI, Régine, TZE 1J4 CALGARY ALBERTA (CA); FAJULA, François, F-34820 Teyran (FR); BULUT, Métin, B-35550 Heusden-Zolder (BE); DATH, Jean-Pierre, B-7970 Beloeil Hainault (BE); DE JONG, Krijn, Pieter, NL-3991 BK Houten (NL); DE JONGH, Petra, Elisabeth, NL-3583 HV Utrecht (NL); ZECEVIC , Jovana, NL-3511 HB Utrecht (NL); VAN LAAK, Adrianus Nicolaas Cornelis, NL-3993 DB Houten (NL)
(74) Mandataire: Fédit-Loriot
(86) Numéro de dépôt international: PCT/FR2009/052668
(87) Numéro de publication internationale: WO 2010/072976

(56) Documents cités:
- EP-A1- 1 938 898
- WO-A2-2009/062742
- AU-B2- 717 421
- LE VAN MAO R ET AL: "Selective removal of silicon from zeolite frameworks using sodium carbonate" JOURNAL OF MATERIALS CHEMISTRY, THE ROYAL SOCIETY OF CHEMISTRY, CAMBRIDGE, GB LNKD- DOI:10.1039/JM9940400605, vol. 4, no. 4, 1 janvier 1994 (1994-01-01) , pages 605-610, XP008109133 ISSN: 0959-9428
- LE VAN MAO R ET AL: "pH of the sodium carbonate solution used for the desilication of zeolite materials" JOURNAL OF MATERIALS CHEMISTRY, THE ROYAL SOCIETY OF CHEMISTRY, CAMBRIDGE, GB LNKD- DOI:10.1039/JM9950500533, vol. 5, no. 3, 1 janvier 1995 (1995-01-01) , pages 533-535, XP008109132 ISSN: 0959-9428
- TAO YOUSHENG, ET AL.: "Mesopore-modified zeolites: preparation, characterization and applications" CHEMICAL REVIEWS, vol. 106, 31 janvier 2006 (2006-01-31), pages 896-910, XP002584643
- SANDER VAN DONK ET AL: "Generation, Characterization, and Impact of Mesopores in Zeolite Catalysts" CATALYSIS REVIEWS: SCIENCE AND ENGINEERING, MARCEL DEKKER INC. NEW YORK, US LNKD- DOI:10.1081/CR-120023908, vol. 45, no. 2, 1 janvier 2003 (2003-01-01), pages 297-319, XP001539970 ISSN: 0161-4940
- GROEN JOHAN C., ET AL.: "Optimal aluminum-assisted mesoporosity development in MFI zeolites by desilication" JOURNAL OF PHYSICAL CHEMISTRY B, vol. 108, 7 août 2004 (2004-08-07), pages 13062-13065, XP002584644
- K.P. DE JONG ET AL.: "Zeolite y crystals with trimodal porosity as ideal hydrocracking catalysts", ANGEW. CHEM. INT. ED., vol. 49, no. 52, 2010, pages 10074 - 10078
- Groen, J.C. et al: "Mesoporous beta zeolite obtained by desilication", Microporous and Mesoporous Materials, Elsevier, Amsterdam ,NL, vol. 114, no. 1-3, 1 September 2008 (2008-09-01), pages 93-102, Amsterdam ,NL ISSN: 1387-1811, DOI: 10.1016/j.micromeso.2007.12.025

## Description

L'invention concerne le domaine des catalyseurs, en particulier des zéolithes Y à structure faujasite.

Les différentes zéolithes se distinguent par des structures et des propriétés différentes. Quelques structures couramment utilisées dans le domaine de la catalyse sont décrites ci-après.

La zéolithe Y (FAU) est une zéolithe tridimensionnelle à larges pores, dont la structure présente de larges cavités interconnectées par des canaux formés de cycles à 12 éléments (il y a 12 cations (Si4+ et Al3+) et 12 anions O2- présents dans le cycle).

La zéolithe béta (BEA) est une zéolithe tridimensionnelle à larges pores comportant des pores formés de cycles à 12 éléments dans toutes les directions.

La zéolithe ZMS-5 (MFI) est une zéolithe à pores de taille moyenne quasiment tridimensionnelle, comportant des pores formés de cycles à 10 éléments dans une direction qui sont interconnectés par des canaux en zig-zag formés de cycles à 10 éléments (c'est la raison pour laquelle cette structure est considérée comme quasi-tridimensionnelle) .

La Mordénite (MOR) est une zéolithe à larges pores formés de cycles à 12 éléments, avec des canaux s'étendant dans une seule direction et qui présente entre ces canaux de petites poches formées de cycles à 8 éléments.

La Ferrierite (FER) est une zéolithe dimensionnelle à pores de taille moyenne comportant des canaux principaux formés de cycles à 10 éléments, qui sont interconnectés via des canaux latéraux formés de cycles à 8 éléments.

Les zéolithes sont des matériaux catalytiques importants et largement utilisés dans les réactions catalytiques acides comme le craquage, notamment l'hydrocraquage, le FCC et le craquage d'oléfines, les réactions d'isomérisation, notamment de paraffines et d'oléfines, et également dans les technologies de conversion de méthanol, par exemple MTO, MTP et MTG.

Dans ces réactions, les zéolithes, et en particulier leurs structures microporeuses, sont souvent déterminantes pour obtenir une bonne activité catalytique, une bonne stabilité et/ou une bonne sélectivité.

Cependant, les structures microporeuses peuvent également présenter des inconvénients, par exemple le faible accès de molécules dans les cristaux de zéolithes, une adsorption non désirée de réactifs et/ou de produits durant la catalyse. Ces contraintes stériques diminuent l'accessibilité du volume microporeux de la zéolithe durant la réaction, ce qui peut conduire dans certains cas à une utilisation peu ou pas efficace.

Ainsi, un des éléments importants est l'obtention de zéolithes présentant une accessibilité suffisante aux réactifs et/ou produits, afin d'améliorer l'efficacité du catalyseur.

Parmi les solutions envisagées, on peut citer la réduction de la taille des cristaux de zéolithes. Cependant, cette solution n'est pas toujours applicable industriellement.

Une autre stratégie consiste à créer un système de pores secondaires, consistant en des mésopores (2-50 nm), dans les cristaux microporeux de zéolithes. Traditionnellement, des mésopores sont introduits dans des cristaux de zéolithes ou de quasi-zéolithes par déalumination, par exemple en utilisant un traitement hydrothermique, des techniques de lixiviation acide, ou des traitements chimiques à base d'EDTA ou de (NH₄)₂SiF₆. Le document AU 717421B2 décrit la création de mésopores dans des zéolithes Y par traitement hydrothermique à des températures supérieures au point d'ébullition atmosphérique de la solution de traitement.

Ces dernières années, différentes techniques alternatives ont été proposées :
- recristallisation des parois d'un matériau mésoporeux en zéolithe,
- effectuer à l'échelle mésoscopique une matrice de polymère cationique,
- construire un matériau mésoporeux grâce à des précurseurs zéolithes de type silice organique, et
- assemblage direct de germes de zéolithes en utilisant une matrice pour former les mésopores.

Certaines de ces approches ont conduit à des catalyseurs améliorés. Cependant, ces techniques sont très complexes et impliquent l'utilisation de matrices organiques très chères. Ainsi, l'utilisation en industrie de ces matériaux est encore très limitée, notamment à cause de leur prix très élevé.

D'autre part, certaines techniques de l'art antérieur peuvent nécessiter des conditions très précises et/ou l'emploi de réactifs dangereux et/ou polluants, des réactifs onéreux et/ou ne pas permettre de production de masse.

Enfin, certaines techniques ne permettent pas une bonne maîtrise des caractéristiques de catalyseurs, par exemple une mésoporosité « aléatoire » ou non optimale, ou encore qu'une partie des mésopores sont des cavités, c'est-à-dire qu'ils ne sont pas accessibles ou pas aisément accessibles de l'extérieur.

Par ailleurs, récemment, une autre technique alternative pour la formation de mesopores intracristallins a consisté en un traitement de désilication en milieu alcalin.

Par exemple la publication J.C. Groen et al., Microporous Mesoporous Mater. 114 (2008) 93 décrit le traitement alcalin de zéolithes béta, réalisé sur la zéolithe telle que préparée, sans traitement de déalumination préalable. A température ambiante, quasiment aucune formation de mesopores n'est observée. Seule une température plus élevée, de l'ordre de 318 K permet d'observer la formation de mesopores.

D'autres publications concernent le traitement alcalin des zéolithes ZMS-5 (J.C. Groen et al., JACS 127 (2005) 10792) ou MFI, BEA, FER et MOR (J.C. Groen et al., Microporous Mesoporous Mater. 69 (2004) 29)

Ainsi, l'invention vise à résoudre en tout ou partie les problèmes évoqués ci-dessus.

Selon un premier aspect, l'invention a pour objet une zéolithe Y modifiée de structure faujasite, telle que définie dans la revendication 7, dont la structure intracristalline présente au moins un réseau de micropores, au moins un réseau de petits mesopores de diamètre moyen de 2 à 5 nm et au moins un réseau de grands mesopores de diamètre moyen de 10 à 50 nm, ces différents réseaux étant interconnectés.

La zéolithe Y modifiée de la présente invention présente ainsi une porosité intracristalline trimodale, c'est-à-dire trois réseaux de pores de diamètres moyens différents à l'intérieur de chaque cristal. Elle présente un rapport atomique Si/Al supérieur ou égal à 17, inférieur ou égal 35 et un volume mésoporeux supérieur ou égal à 0,22 ml/g.

Pour rappel, les zéolithes Y présentent en général des micropores de diamètre moyen compris entre 0,7 et 1,4 nm.

En particulier, la zéolithe Y modifiée selon l'invention présentera avantageusement un rapport Vs/Vl du volume (Vs) des petits mesopores (« small mesopores » en anglais) sur le volume (Vl) des grands mesopores (« large mesopores » en anglais), supérieur ou égal à 1, notamment supérieur ou égal à 1,20, voire supérieur ou égal à 1,60, tout particulièrement supérieur ou égal à 1,80, encore plus particulièrement supérieur ou égal à 2.

La zéolithe selon l'invention peut présenter une teneur en sodium (Na) inférieure ou égale à 100 ppm, notamment inférieure ou égale à 50 ppm.

La zéolithe peut présenter un rapport atomique Si/Al inférieur ou égal à 25, notamment inférieur ou égal à 24, voire inférieur ou égal à 23, tout particulièrement inférieur ou égal à 22, encore plus particulièrement inférieur ou égal à 21, éventuellement inférieur ou égal à 20,5.

Le rapport Si/Al peut également être inférieur ou égal à à 30, tout particulièrement inférieur ou égal à 28, encore plus particulièrement inférieur ou égal à 25.

Le rapport Si/Al peut encore être supérieur ou égal à 18, tout particulièrement supérieur ou égal à 19, encore plus particulièrement supérieur ou égal à 20.

La zéolithe Y modifiée peut présenter un volume mésoporeux supérieur ou égal à 0,25 ml/g, en particulier supérieur ou égal à 0,35 ml/g, voire supérieur ou égal à 0,40 ml/g.

Par volume mésoporeux, on entend le volume des mesopores de diamètre moyen compris entre 2 et 50 nm, ce qui représente dans le cas présent la somme des volumes des petits et grands mesopores.

En particulier, la zéolithe selon l'invention peut présenter un volume de petits mesopores (Vs) supérieur ou égal à 0,10 ml/g, notamment supérieur ou égal à 0,15 ml/g, en particulier supérieur ou égal à 0,20 ml/g, voire supérieur ou égal à 0,25 ml/g.

La zéolithe Y modifiée peut également présenter un volume microporeux inférieur ou égal à 0,20 ml/g, notamment inférieur ou égal à 0,18 ml/g, en particulier inférieur ou égal à 0,16 ml/g, voire inférieur ou égal à 0,125 ml/g, tout particulièrement inférieur ou égal à 0,10 ml/g.

Le rapport volume mésoporeux / volume microporeux peut être supérieur ou égal à 1, notamment supérieur ou égal à 1,5, en particulier supérieur ou égal à 3, voire supérieur ou égal à 3,5, tout particulièrement supérieur ou égal à 4, encore plus particulièrement supérieur ou égal à 4,5, voire même supérieur ou égal à 5.

La zéolithe Y modifiée peut présenter une surface externe Sₑₓₜ supérieure ou égale à 200 m²/g, notamment supérieure ou égale à 250 m²/g, en particulier supérieure ou égale à 300 m²/g, voire supérieure ou égale à 350 m²/g et tout particulièrement supérieure ou égale à 400 m²/g.

La densité de sites acides, mesurée par TPD NH₃ peut être inférieure ou égale à 0,25 mmol/g, notamment inférieure ou égale à 0,23 mmol/g, en particulier inférieure ou égale à 0,22 mmol/g, voire inférieure ou égale à 0,21 mmol/g.

La zéolithe Y modifiée présente les pics caractéristiques des zéolithes Y sur un diagramme de diffraction des rayons X. Ces pics correspondent aux distances interplanaires suivantes : d = 13.965, 8.552, 7.293, 5.549, 4.655, 4.276, 3.824, 3.689, 3.232, 2.851, 2.793 et 2.578 Å (référence : Collection of simulated XRD powder patterns for zeolites, fifth revised edition, by M.M.J Treacy and J.B. Higgins, Elsevier editor).

Une zéolithe Y modifiée selon l'invention, ou un matériau composite, comprenant de la zéolithe Y modifiée selon l'invention, notamment au moins 20 % en poids par rapport au poids total du matériau composite, est préparée par les étapes suivantes :
a) mettre en suspension une zéolithe Y ou un matériau composite la comprenant, notamment en une teneur d'au moins 20 % en poids par rapport au poids total du matériau, avec une solution aqueuse basique comprenant au moins une base forte, notamment NaOH ou de KOH, et/ou faible, en particulier carbonate de sodium, citrate de sodium etc., par exemple à une concentration allant de 0,001 à 0,5 M, à température ambiante, sous agitation magnétique ou mécanique,
b) filtrer la zéolithe Y obtenue et la laver avec un solvant, notamment un solvant polaire, par exemple de l'eau distillée pure,
c) éventuellement sécher la zéolithe lavée,
d) mettre en contact sous agitation la zéolithe lavée et éventuellement séchée dans une solution, notamment aqueuse, de NH₄NO₃, notamment à une concentration allant de 0,01 à 0,5 M,
e) laver la zéolithe à l'eau distillée jusqu'à pH neutre,
f) calciner la zéolithe obtenue et
g) récupérer la zéolithe.

Le procédé permet l'obtention de zéolithes Y modifiées présentant un rapport atomique Si/Al supérieur ou égal à 17, inférieur ou égal 35 et/ou un volume mésoporeux supérieur ou égal à 0,22 ml/g.

D'autre part, ce procédé peut permettre l'obtention de zéolithes Y présentant, par rapport à la zéolithe de départ :
- une augmentation du volume mésoporeux d'au moins 0,05 ml/g, notamment d'au moins 0,1 ml/g, en particulier d'au moins 0,15 ml/g, voire d'au moins 0,21 ml/g,
- une augmentation du volume de petits mésopores d'au moins 0,05 ml/g, notamment d'au moins 0,1 ml/g, en particulier d'au moins 0,15 ml/g,
- une diminuation du volume microporeux d'au moins 0,05 ml/g, notamment d'au moins 0,075 ml/g, en particulier d'au moins 0,10 ml/g, voire d'au moins 0,15 ml/g, et/ou
- une diminuation du rapport atomique Si/Al d'au moins 2, notamment d'au moins 4, en particulier d'au moins 6, voire d'au moins 10,
- une augmentation de la surface extérieure (Sₑₓₜ) d'au moins 50 m²/g, notamment d'au moins 100 m²/g, en particulier d'au moins 150 m²/g, voire d'au moins 240 m²/g, et/ou
- une diminution de l'acidité mesurée par TPD NH₃ d'au moins 0,05 mmol/g, notamment d'au moins 0,1 mmol/g.

Dans l'étape a) le rapport pondéral solution aqueuse/zéolithe, notamment zéolithe Y, peut aller de 20 à 100, notamment de 30 à 80, en particulier de 40 à 60, voire être d'environ 50.

La concentration en base de la solution de l'étape a) peut aller de 0,001 à 0,5 M, notamment de 0,005 à 0,2, en particulier de 0,01 à 0,1, voire être d'environ 0,05 M.

Dans l'étape d) le rapport pondéral solution de NH₄NO₃ / zéolithe Y peut aller de 5 à 75, notamment de 10 à 50, en particulier de 20 à 30, voire être d'environ 25.

La concentration en NH₄NO₃ de la solution de l'étape d) peut aller de 0,01 à 0,5 M, notamment de 0,05 à 0,4, en particulier de 0,1 à 0,3, voire être d'environ 0,2 M.

Tout particulièrement, le matériau de départ est une zéolithe Y, qui a subi au moins un traitement de déalumination, en particulier partielle, par exemple des traitements acides et/ou à la vapeur. Ces traitements peuvent permettre (i) de diminuer l'acidité du matériau, (ii) d'augmenter, ne serait-ce qu'un peu, la mésoporosité du matériau initial, qui est thériquement purement microporeux. Tout particulièrement ces traitements correspondent à ceux décrits dans le brevet US 5,601,798.

Le procédé peut en outre comprendre une étape de neutralisation de la solution avant la première filtration. Ceci peut permettre d'arrêter la désilication. Cette désilication peut avoir pour résultat de créer de la mésoporosité, notamment trop de mésoporosité. A ce stade, cette création de mésoporosité peut être un problème, en particulier si elle est trop importante, en provoquant une perte de la structure cristalline de la zéolithe, par exemple une perte de microporosité, ce qui peut induire une diminution de l'activité intrinsèque du matériau.

Cette étape de neutralisation peut être réalisée par lavage à l'eau ou avec tout type d'acide, par exemple de l'acide sulfurique, en particulier dans des conditions industrielles sur de grandes quantités de produit.

Avantageusement les étapes de mise en contact (suspension) dans une solution basique et/ou dans la solution de NH₄NO₃ se déroulent à température ambiante et en particulier ne requièrent pas de chauffage.

Par « température ambiante », on entend au sens de la présente invention une température allant de 18 à 25°C, et en particulier une température de 20°C.

Dans l'étape a) la mise en contact avec une solution basique peut durer de 5 à 120 min, notamment de 10 à 60 min, en particulier de 15 à 30 min.

Lors de cette mise en contact, la suspension peut être agitée, notamment par agitation magnétique ou mécanique.

L'étape de séchage peut être effectuée à une température supérieure ou égale à 70°C, notamment supérieure ou égale à 75°C, voire supérieure ou égale à 80°C. Elle peut aller de une à 36 heures, notamment de 3 à 24 heures et en particulier de 8 à 15 heures.

L'étape de séchage peut durer jusqu'à ce que le poids de la zéolithe ne varie plus, en particulier lorsque la différence entre le poids de la zéolithe à un temps t et le poids de cette zéolithe après deux heures de chauffage varie de moins de 0,1 % en poids par rapport au poids de la zéolithe.

Le séchage peut être effectué sous air ou sous atmosphère inerte.

L'étape d) de mise en contact avec la solution de NH₄NO₃ peut durer de 2 à 24 heures, notamment de 3 à 12 heures, en particulier de 4 à 8 heures, voire environ quatre heures.

L'étape f) de calcination peut être effectuée à une température supérieure ou égale à 400°C, notamment supérieure ou égale à 450°C, voire supérieure ou égale à 500°C. Le chauffage peut durer de 2 à 8 heures, en particulier de 3 à 6 heures, voire de 5 à 7 heures.

Le chauffage peut comprendre une montée en température de 0,5 à 2°C/min, notamment de 1°C/min.

Le chauffage peut être réalisé sous air ou sous atmosphère inerte.

Le procédé décrit ci-dessus peut permettre d'obtenir une zéolithe Y présentant un volume microporeux inférieur de 30 %, notamment de 40 %, en particulier de 45 %, voire de 50 % au volume microporeux de la zéolithe Y de départ.

Il peut également permettre d'obtenir une zéolithe Y présentant un volume mésoporeux supérieur de 30 %, notamment de 35 %, en particulier de 40 %, voire de 45 % au volume mésoporeux de la zéolithe Y de départ. En particulier, l'augmentation du volume mésoporeux est essentiellement due à la création de petits mesopores.

Bien entendu, l'invention porte sur une zéolithe Y obtenue par le procédé décrit ci-dessus.

Selon un autre de ses aspects, l'invention a optionnellement pour objet la restauration (« healing ») des défauts cristallins créés par le traitement alcalin, défauts qui entraînent une diminution de la densité des sites acides mesurée par désorption de NH₃. Cette restauration peut être effectuée par un traitement doux à la vapeur (voir van Donk et al., Génération, Characterization, and Impact of Mesopores in Zeolite Catalysts. Catalysis Reviews, 2003. 45(2): p. 297 - 319) conduisant à des valeurs d'acidité mesurées par TPD de NH₃ supérieures à 0,25 mmol/g.

Selon un autre de ses aspects, l'invention a pour objet des particules, en particulier catalytiques, comprenant la zéolithe Y modifiée selon l'invention et au moins un agent liant, comme la silice ou l'alumine. Ces particules peuvent encore comprendre un métal catalytique.

Ces particules peuvent être préparées par mélange de zéolithe Y modifiée et d'au moins un agent liant, comme la silice ou l'alumine, selon le procédé de traitement alcalin décrit ci-dessus.

Le procédé de préparation de ces particules peut encore comprendre une étape de fixation, par exemple par adsorption, de métal catalytique.

Ces objets correspondent à une mise en forme macroscopique du catalyseur, c'est-à-dire la mise en forme du matériau modifié à l'aide d'un liant de type silice ou alumine. Ceci peut par exemple permettre une utilisation directe du matériau dans des réacteurs typiques de l'industrie, par exemple réacteurs lit fixe (« fixed bed »). Cette mise en forme peut être effectuée par extrusion mais également permettre une mise en forme macroscopique de billes ou autres formes macroscopiques adaptables à l'utilisation en réacteurs à lits fixes ou mobiles.

En particulier, le procédé de traitement alcalin pourra être appliqué à une composition comprenant au moins une zéolithe Y modifiée (suite à un procédé de déalumination) et un agent liant, en particulier sous forme de particules prêtes à être utilisées dans un réacteur à lits fixes ou mobiles, notamment sous forme extrudée, ou sous forme de billes.

Ceci peut ainsi permettre d'augmenter le volume mésoporeux de la zéolithe Y présente dans le matériau composite (matériau composite = zéolithe + liant).

Selon un autre de ses aspects, l'invention a pour objet un catalyseur comprenant une zéolithe Y modifiée selon l'invention et éventuellement catalyseur, notamment un métal catalytique. Ce métal peut être déposé sur la zéolithe par une étape de fixation, par exemple d'imprégnation.

Parmi les métaux catalytiques, on peut citer le platine, le palladium, le nickel, le cobalt, le tungstène, mais aussi les autres métaux de transition.

Selon un autre de ses aspects, l'invention a pour objet un catalyseur comprenant au moins une zéolithe telle que décrite ci-dessus ou un matériau composite comprenant une telle zéolithe et éventuellement un catalyseur supporté dessus.

Selon un autre de ses aspects, l'invention a pour objet l'utilisation d'un catalyseur ou de particules selon l'invention dans un procédé de traitement du pétrole ou des résidus lourds, notamment en tant que catalyseur d'hydroconversion en FCC, par exemple en tant que catalyseur d'hydrocraquage ou d'hydroisomérisation.

L'invention a également pour objet un procédé de fabrication d'un catalyseur comprenant au moins une étape d'imprégnation d'un métal catalytique sur une zéolithe telle que décrite ci-dessus.

Les méthodes utilisées pour effectuer les mesures des différentes caractéristiques sont en général les techniques classiques. Plus particulièrement, les techniques suivantes ont été utilisées dans le cadre de cette invention :
i) la composition chimique, en particulier le rapport atomique Si/Al et la teneur en sodium, a été déterminée par spectrométrie d'adsorption atomique (Service Central d'Analyse CNRS, Solaize),
ii) la structure de la zéolithe a été définie par diffraction des rayons-X (DRX) à l'aide un diffractomètre de type Bruker Advance D8 utilisant la raie Kα12 du Cobalt, les spectres étant enregistrés pour un angle 2 théta compris de 5 à 50°,
(iii) les mesures d'adsorption, désorption ont été réalisées à la température de l'azote liquide sur un appareil de type Micrometrics Tristar 3000. Avant chaque mesure, les échantillons ont été dégazés sous azote à 300°C pendant 840 min,
iv) la microstructure des zéolites a été observée par microscopie électronique à transmission (TEM) en utilisant un microscope de type Jeol 1200 EX II opérant à une tension de 100 kV (grossissements 20 000- 120 000),
(v) les études de tomographie électronique ont été réalisées sur un microscope à transmission électronique sur un appareil de type Tecnai 20 sous une tension de 200kV. Les séries d'images ont été acquises dans des conditions d'images à champ brillant pour une gamme angulaire de -75 à 75° et avec un incrément d'inclinaison de 1° pour un agrandissement de 19 000 ou 29 000. Des reconstructions en 3 dimensions ont été calculées à partir des séries d'inclinaisons acquises au moyen d'un logiciel de type IMOD,
vi) les propriétés texturales, définies par la surface externe (Sₑₓₜ), le volume microporeux (V_{micro}) et le volume mésoporeux (Vₘₑₛₒ), ont été définies par volumétrie à l'azote à partir des isothermes d'adsorption enregistrés à 77 K sur un appareil de type Microméritics ASAP 2000/2010 en appliquant les méthodes bien connues de l'homme de l'art (Barett, E. P.; Joyner, L. G.; Halenda, P. P. J. Am. Chem. Soc. 1951, 73, 373-380. Rouquerol, F.; Rouquerol, J.; Sing, K. Adsorption by powders and porous solids; Academic Press: San Diego, 1999),
vii) l'acidité des catalyseurs a été établie par Thermo-Désorption Programmée de l'ammoniac (TPD NH₃) entre 100 et 650°C (Niwa, M.; Iwamoto, M.; Segawa, K. B. Chem. Soc. Jpn 1986, 59) en dosant l'ammoniac désorbé par conductivité.

L'invention est maintenant décrite en référence aux dessins annexés, non limitatifs, sur lesquels :
- La figure 1 représente les isothermes d'adsorption d'azote d'une zéolithe Y commerciale (HY30) et de deux zéolithes selon l'invention (courbes HYA et HYB), le volume adsorbé d'azote (cm³/g) étant représenté en fonction de la pression partielle d'azote (P/Po),
- La figure 2 représente les courbes dV/dlogD d'adsorption BJH en fonction du diamètre de pore (nm) mesurées pour une zéolithe Y commerciale (HY30) et deux zéolithes selon l'invention (courbes HYA et HYB),
- Les figures 3, 3A et 3B représentent respectivement une image TEM-3D d'une zéolithe Y commerciale (HY30) et de deux zéolithes selon l'invention (HYA et HYB),
- Les figures 4 et 4A représentent une reconstruction en trois dimensions d'un cristal d'une zéolithe commerciale et d'une zéolithe selon l'invention (HYA), les figures 5 et 5A d'une part et 6 et 6A d'autre part représentent une reconstruction en trois dimensions de la porosité ouverte / fermée de ces mêmes zéolithes commerciale et selon l'invention,
- La figure 7 est un schéma représentant l'effet possible d'un traitement selon l'invention,
- La figure 8 représente le taux de conversion (% en poids) en fonction de la température (°C) de l'hydrocraquage du n-hexadécane par un catalyseur comprenant de la zéolithe Y commerciale (HY30/Pt) et par un catalyseur selon l'invention (HYA/Pt) ;
- La figure 9 représente le ratio C6/C10 en fonction du taux de conversion obtenu pour l'hydrocraquage du n-hexadécane par un catalyseur comprenant de la zéolithe Y commerciale (HY30/Pt) et par un catalyseur selon l'invention (HYA/Pt) ;
- La figure 10 représente la distribution (% en poids) des produits d'hydrocraquage du squalane obtenu par un catalyseur comprenant de la zéolithe Y commerciale et par un catalyseur selon l'invention, pour un taux de conversion de 75%.

### Exemples

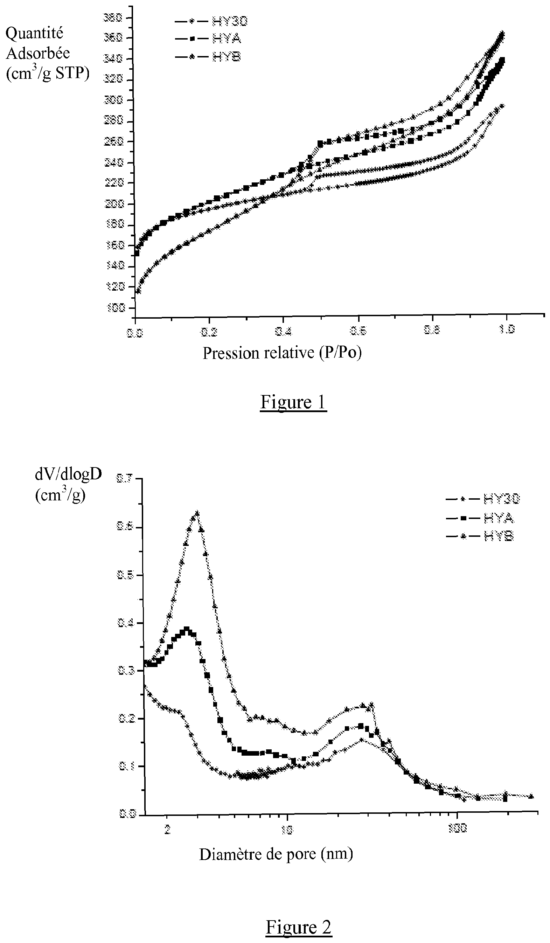

La zéolithe Y commercialisée sous la dénomination CBV760 par Zeolyst Int. est appelée ici HY30. L'adsorption d'azote de HY30 est représentée sur la figure 1, les caractéristiques de HY30 sont données dans le tableau 1.

Cette zéolithe Y a subi une déalumination avant traitement pour obtenir une zéolithe Y modifiée. Elle présente un ratio Si/Al de 28,4, une acidité mesurée par TPD NH₃ de 0,32 mmol/g et une teneur en Na inférieure à 50ppm.

### Exemple 1 : Préparation d'une zéolithe Y modifiée (HYA)

Le composé HY30 est soumis au traitement alcalin suivant :
- HY30 (2 g) est mis en contact avec une solution aqueuse de NaOH à 0,05 M (50 ml) pendant 15 mn à température ambiante et sous agitation,
- Le produit résultant est filtré et lavé avec de l'eau jusqu'à obtention d'un pH neutre,
- Le produit filtré est séché pendant 12 h à 80°C,
- Au produit sec est ajouté une solution aqueuse de NH₄NO₃ à 0,20 M (50 ml), l'ensemble est laissé 5 h à température ambiante et sous agitation,
- Le produit obtenu est lavé avec de l'eau distillée (3 x 50 ml),
- Le produit est alors calciné à 500°C pendant 4h (gradient de température 1°C/mn) avec un flux d'air, puis
- Le produit HYA est récupéré.
Le produit HYA présente un ratio Si/Al de 24,8, une acidité mesurée par TPD NH3 de 0,20 mmol/g et une teneur en Na inférieure à 50ppm.

### Exemple 2 : Préparation d'une zéolithe Y modifiée (HYB)

Le composé HY30 est soumis au traitement alcalin suivant :
- HY30 (2 g) est mis en contact avec une solution aqueuse de NaOH à 0,10 M (50 ml) pendant 15 mn à température ambiante et sous agitation,
- Le produit résultant est filtré et lavé avec de l'eau jusqu'à obtention d'un pH neutre,
- Le produit filtré est séché pendant 12 h à 80°C,
- Au produit sec est ajouté une solution aqueuse de NH₄NO₃ à 0,20 M (50 ml), l'ensemble est laissé 5 h à température ambiante sous agitation,
- Le produit obtenu est lavé avec de l'eau distillé (3 x 50 ml),
- Le produit est alors calciné à 500°C pendant 4h (gradient de température 1°C/mn) avec un flux d'air, puis
- Le produit HYB est récupéré.
Le produit HYB présente un ratio Si/Al de 20,5, une acidité mesurée par TPD NH3 de 0,21 mmol/g et une teneur en Na inférieure à 50ppm.

### Caractérisation des composés HY30, HYA et HYB

### Caractérisation par adsorption d'azote

Les courbes isothermes d'adsorption d'azote de HY30, HYA et HYB sont représentées sur la figure 1.

La présence d'une boucle d'hystérèse sur chacune des isothermes met en évidence la présence de mesopores dans chacun des échantillons.

La comparaison des isothermes présentées sur cette figure 1, et en particulier l'augmentation de la quantité absorbée pour aux pressions relatives les plus élevées montre que le traitement alcalin provoque une augmentation de la porosité totale entre HY30 et HYA, HYB.

En outre, plus la concentration en NaOH est élevée, plus la porosité est importante.

Aux pressions relatives les plus faibles, l'adsorption d'azote qui correspond à la microporosité ne semble pas varier pour le composé HY30 et les échantillons HYA faiblement alcalinisés. Le traitement alcalin plus sévère des échantillons HYB conduit à une diminution du volume de micropores et à une mésoporosité encore plus importante.

Le développement de la mésoporosité est confirmé par une analyse BHJ (Barret-Joyner-Halenda) de la distribution des dimensions de pores. Cette analyse, dérivée de la partie d'adsorption de l'isotherme, est représentée sur la figure 2.

Comme le montre cette figure 2, l'adsorption BHJ présente clairement deux zones distinctes de dimensions de micropores :
- une zone de « petits mesopores » centrée sur 3 nm
- une zone de « grands mesopores » centrée sur 30 nm.

Du composé HY30 (pas de traitement alcalin), au composé HYA (traitement alcalin doux) puis au composé HYB (traitement alcalin sévère), l'intensité du pic correspondant aux petits mesopores augmente de manière significative, tandis que l'intensité du pic correspondant aux grands mesopores ne présente qu'une faible augmentation couplée à un faible élargissement.

Cette forme des courbes BHJ d'adsorption montre que le traitement alcalin des composés induit essentiellement la formation de petits mesopores, tandis qu'une augmentation du volume des grands mesopores est moins prononcée. De plus, les dimensions des deux types de mesopores ne semblent pas dépendantes des conditions de traitement alcalin.

Le tableau 1 présente des caractéristiques de HY30, HYA et HYB. Notamment, les volumes correspondants des petits et grands mesopores sont dérivés de l'intégration de la partie d'adsorption BHJ pour une gamme de diamètres choisie.

**Tableau 1**

| **Echantillon** | | **HY30** | **HYA** | **HYB** |
|---|---|---|---|---|
| **Sₑₓ₊ₘₑₛₒ ^{a}** | m²/g | 213 | 339 | 443 |
| **V_{micro} ^{b}** | cm³/g | 0,21 | 0,16 | 0,07 |
| **Vₘₑₛₒ^{c}** | cm³/g | 0,16 | 0,25 | 0,37 |
| **V_{small meso}^{d}** | cm³/g | 0,07 | 0,14 | 0,23 |
| **V_{large meso} ^{e}** | cm³/g | 0,09 | 0,11 | 0,14 |
| **V_{macro}^{f}** | cm³/g | 0,02 | 0,02 | 0,03 |
| **Vₜₒₜ^{g}** | cm³/g | 0,45 | 0,51 | 0,55 |
| **Diamètre des pores ^{h}** (nm) | « small » | - | 2,7 | 3,1 |
| | « large » | 28 | 27 | 27 |

| | | | | |
|---|---|---|---|---|
| a surface de mesopores et surface externe calculée à partir de t-plot b volume microporeux obtenu par t-plot c volume mésoporeux obtenu par intégration de la courbe dV/dD d'adsorption BHJ pour les pores de diamètres de 2 à 50 nm. d Volume des petits mesopores (« small mesopores ») obtenu par intégration de la courbe dV/dD d'adsorption BHJ pour les pores de diamètres de 2 à 8 nm e Volume des grands mesopores (« large mesopores ») obtenu par intégration de la courbe dV/dD d'adsorption BHJ pour les pores de diamètres de 8 à 50 nm f Volume des macropores obtenu par intégration de la courbe dV/dD d'adsorption BHJ pour les pores de diamètre supérieur à 50 nm g Volume adsorbé à p/po = 0,99 h Distribution de la dimension des pores obtenue à partir de la courbe dV/dlogD de l'adsorption BHJ. | | | | |

### Caractérisation par diffraction X et microscopie à transmission électronique (TEM)

L'analyse par diffraction X confirme la conservation de la cristallinité de l'échantillon HYA ayant subi un traitement alcalin doux par rapport au composé de départ HY30.

L'échantillon HYB ayant subi un traitement alcalin plus sévère présente une destruction partielle de l'ordre cristallin à grande distance (« long range crystal ordening » en anglais), cependant la cristallinité globale de l'échantillon est préservée, les pics caractéristiques étant toujours présents. La morphologie de la zéolithe Y est en outre confirmée par la physisorption de l'azote et la microscopie électronique.

Les micrographies TEM montrent que les grands cristaux de zéolithe Y restent intacts, même après un traitement alcalin sévère. A l'intérieur de toutes les particules, on observe la présence de mesopores en forme de canaux et de sphères, les canaux pénètrent dans la particule, reliant la surface externe à l'intérieur de la particule. De plus, les échantillons ayant subi un traitement alcalin semblent présenter une structure semblable à une éponge, contrairement au composé HY30 de départ. Les micrographies TEM ne permettent pas de distinguer les liaisons entre les pores et la forme et les dimensions générales des pores.

### Caractérisation par tomographie électronique (3D - TEM)

Au contraire de la microscopie TEM conventionnelle, la tomographie électronique permet une meilleure observation de la structure interne de la structure de pores complexes des échantillons étudiés. Afin de confirmer les résultats de la structure trimodale mise en évidence par la physisorption de l'azote, les échantillons ont été soumis à une analyse par 3D-TEM, et les reconstructions en 3 dimensions (3D) des particules choisies ont été obtenues.

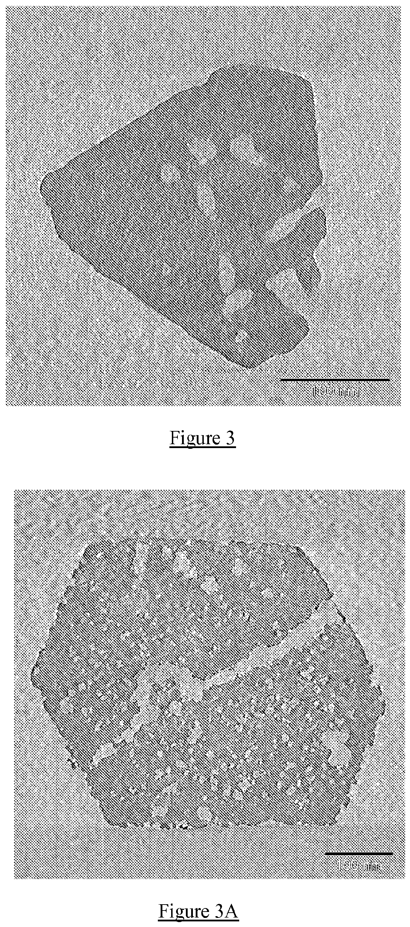

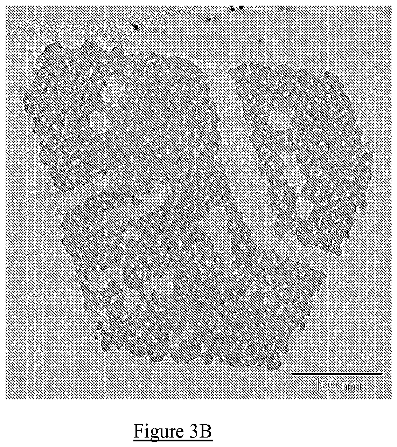

Les figures 3, 3A et 3B représentent une section par reconstruction 3D de chacun des trois échantillons. Les tranches observées ayant une épaisseur entre 0,5 et 0,8 nm, elles ne sont pas affectées par les caractéristiques de recouvrement comme c'est le cas pour les micrographies TEM conventionnelles.

Les régions les plus claires correspondent aux pores, les régions foncées représentent la matière solide.

La figure 3 représente une coupe de l'échantillon HY30, d'épaisseur 0,82 nm : le traitement à la vapeur et à l'acide subi par cet échantillon est principalement responsable de la création de grands mesopores en forme de canaux et de sphères, avec une large gamme de diamètres comme montré par la physisorption de l'azote. Les mesopores en forme de canaux se coupent et pénètrent la particule de l'extérieur vers l'intérieur. La présence de cavités isolées est également confirmée. Bien que la physisorption de l'azote montre que des petits mesopores sont présents pour un volume presque identique à celui des grands mesopores, ils semblent absents.

La figure 3A représente une coupe d'épaisseur 0,82 nm de l'échantillon HYA ayant subi un traitement alcalin modéré. Une nouvelle série de petits mesopores est apparue et les parois des mesopores en forme de canaux et de cavités sont plus irrégulières. La formation de petits mesopores, et leur diamètre (2-5nm) peut être mesurée avec une grande précision et est en accord avec les résultats obtenus de la physisorption de l'azote. De plus, les petits mesopores apparus semblent répartis uniformément sur la totalité du volume de la particule et sont interconnectés.

La figure 3B représente une coupe d'épaisseur 0,54 nm de l'échantillon HYB ayant subi un traitement alcalin sévère. Une augmentation du nombre de petits mesopores est observée, confirmant les résultats de la physisorption de l'azote. Des pores de diamètre aussi petit que 1,2 nm peuvent être observés et la densité générale de ces petits mesopores semble plus importante par rapport au composé HYA. Comme pour l'échantillon HYA, la reconstruction en 3D de toute la particule implique des interconnections de ces petits mesopores.

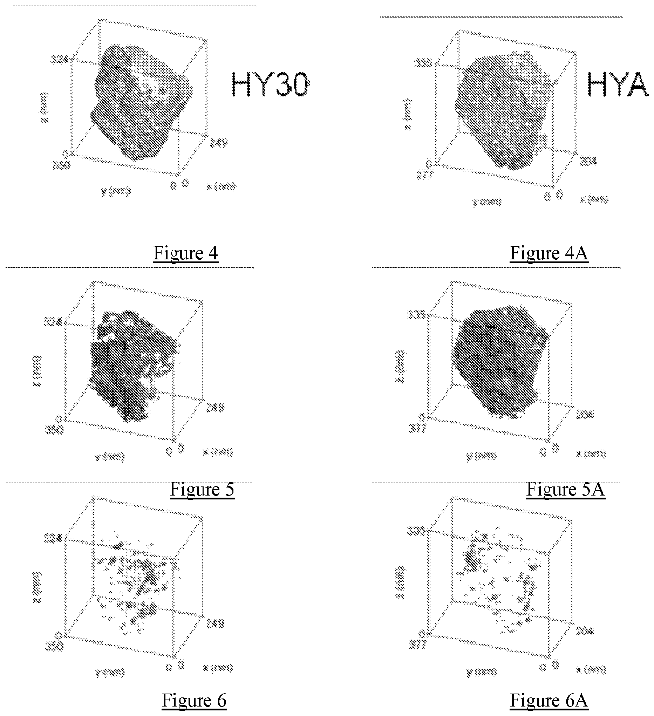

Les figures 4 à 6 et 4A à 6A permettent de visualiser la porosité ouverte et fermée des composés HY30 et HYA, respectivement.

La porosité ouverte (figures 5 et 5A) représente tous les mesopores qui sont accessibles depuis la surface externe d'un cristal via des mesopores.

La porosité fermée (figures 6 et 6B) représente les mesopores accessibles depuis la surface externe d'un cristal uniquement via les micropores, ces figures représentent donc les cavités.

Les figures 4 et 4A représentent la totalité du volume du cristal de HY30 et HYA respectivement analysé. Sur les figures 5, 5A, 6 et 6A, les zones sombres représentent les mesopores intracristallins.

Les figures 5A et 6A montrent que le système de mesopores du cristal de HYA correspond sensiblement à tout le volume du cristal, ce qui n'est pas le cas du système de mesopores de HY30, visiblement moins important (figure 5). Par ailleurs, le nombre de cavités du cristal de HYA est considérablement réduit par rapport à une zéolithe Y n'ayant pas subi de traitement alcalin (HY30).

Le volume très important de mesopores accessibles depuis la surface externe d'un cristal de HYA via des mesopores implique que ces mesopores sont interconnectés. Le système de mesopores de HYA est ainsi amélioré et présente une meilleure interconnectivité par rapport à HY30.

### Conclusion

Les différentes caractérisations ont mis en évidence la structure mésoporeuse particulière de zéolithes Y modifiées selon l'invention.

Le traitement à la vapeur suivi par un traitement à l'acide (HY30) conduit essentiellement à la génération de mesopores de 30 nm environ en forme de canaux et de cavité.

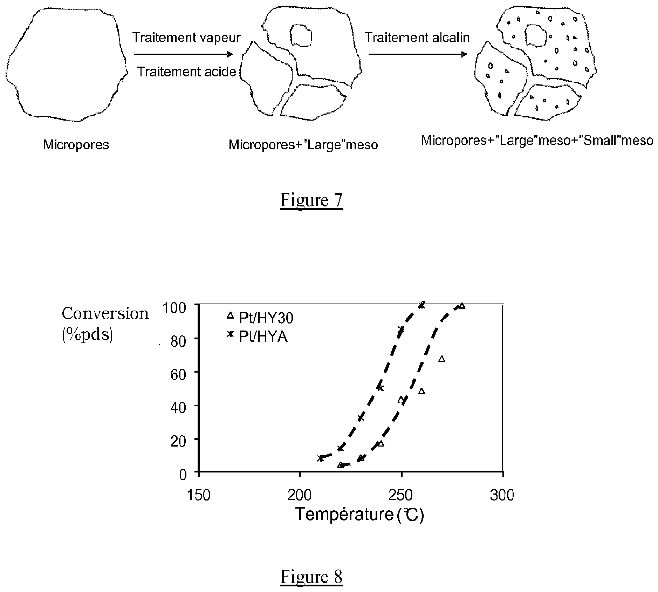

Un traitement alcalin supplémentaire conduit à la formation d'un nouveau réseau de petits mesopores. Les zéolithes modifiées selon l'invention présentent ainsi un système de pore « trimodal », contenant des micropores, des petits mesopores et des grands mesopores, tel que représenté schématiquement sur la figure 7.

Sans vouloir être lié par cette théorie, il semble d'après l'analyse 3D-TEM que ces différents réseaux de micropores et mesopores, et en particulier les nouveaux pores formés (réseau de petits mesopores), sont interconnectés (les réseaux de mesopores étant interconnectés entre eux et via les micropores), ce qui permettrait de réduire les limitations de diffusion moléculaire rencontrées habituellement, conduisant à une activité catalytique augmentée des zéolithes selon l'invention, comme le montrent les exemples suivants.

### Exemple 3 : Catalyse - Hydrocraquage de n-hexadécane

Des catalyseurs sont préparés à partir de HY30 (HY30/Pt) et de HYA (HYA/PT) par imprégnation d'une solution de sels de platine, afin de conduire à une charge de Pt de 0,3 % en poids environ par rapport au poids total du catalyseur.

Les catalyseurs ont été testés dans les conditions suivantes :
WHSV : 1-4 h⁻¹
H₂/HC: 3-4 mol/mol;
Pression: 20 bars;
Température: 170-350°C;
Quantité de catalyseur ~ 1.3 g (Ø 180-425 µm)

Les produits ont été analysés en ligne par un chromatographe en phase gazeuse de type GC HP 5890 séries 2 (colonne HP-1 apolaire, 30m, 0.53mm, 2.65µm).

La figure 8 représente le taux de conversion en fonction de la température pour HYA/Pt et HY30/Pt. Le gain en activité du catalyseur HYA/Pt est de l'ordre de 10 à 20°C pour l'hydrocraquage du n-hexadécane. A 240°C, le taux de réaction de l'hydrocraquage du n-hexadécane est plus de 4 fois supérieur pour HYA/Pt que pour HY30/Pt, 4,1 10-4 g.s⁻¹.g⁻¹ et 0,9 g.s⁻¹.g⁻¹ respectivement.

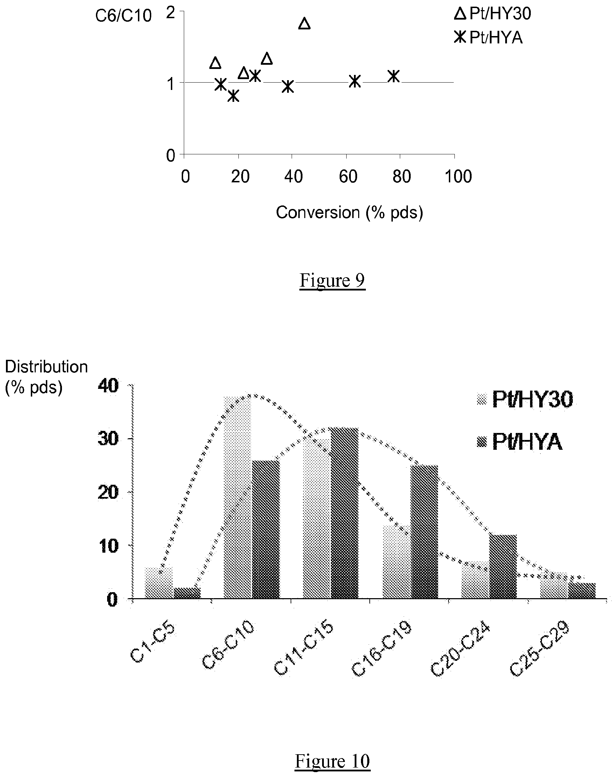

La figure 9 représente le ratio C6/C10 en fonction du taux de conversion pour l'hydrocraquage du n-hexadécane (C16).

Cette figure montre un meilleur comportement d'hydrocraquage, qui est pour le craquage de C16 défini par une distribution symétrique autour de C8 (tel que défini par I. E. Maxwell et al., Handbook of Heterogeneous Catalysis, vol. 4, Wiley-VCH, Weinheim 1997, p. 2017). La symétrie de craquage peut être caractérisée par le rapport C6/C10 (mol/mol) qui, dans le cas d'un « hydrocraquage idéal », doit être autour de 1.

Cette symétrie de craquage traduit le fait que l'occurrence de craquage secondaire, ou la fabrication de gaz, est significativement réduite sur toute la gamme de taux de conversion.

On peut considérer que HYA/Pt est proche d'un comportement en hydrocraquage idéal, le ratio C6/C10 étant très proche de 1 sur toute la gamme du taux de conversion.

### Exemple 4 : Catalyse - Hydrocraquage du squalane

L'hydrocraquage du squalane a également été testé.

Le squalane (ou hexaméthyltétracosane) est une molécule organique de type paraffine comportant 30 atomes de carbone, dont six se trouvent dans des groupements méthyle, respectivement aux positions 2, 6, 10 15, 19 et 23. Son encombrement stérique est plus important que celui de l'hexadécane et il peut, dans une certaine mesure, être utilisé en tant que molécule modèle de charges d'hydrocraquage (poids moléculaire élevé).Des catalyseurs sont préparés à partir de HY30 (HY30/Pt) et de HYA (HYA/PT) par imprégnation d'une solution de sels de platine, afin de conduire à une charge de Pt de 0,3 % en poids environ par rapport au poids total du catalyseur.

Les catalyseurs ont été testés dans les conditions suivantes :
WHSV : 1-4 h⁻¹
H₂/HC: 3-4 mol/mol;
Pression: 20 bars;
Température: 170-350°C;
Quantité de catalyseur ~ 1.3 g (Ø 180-425 µm)

Les produits ont été analysés en ligne par un chromatographe de type HP5975C (colonne capillaire HP-5 30m, 0.25mm, 0.25 µm).

La symétrie des produits de l'hydrocraquage du squalane est également améliorée de manière significative.

La figure 10 représente la distribution du rendement pour HY30/Pt et HYA/Pt, mesurée à un taux de conversion de 75%.

Cette figure 10 montre une diminution significative de la contribution du craquage secondaire, et donc de la production de gaz, ainsi qu'une sélectivité améliorée et un rendement accru en distillats moyens pour des taux de conversion similaires.

## Revendications

1. Procédé de préparation de zéolithe Y modifiée de structure Faujasite ou de matériau composite, comprenant de la zéolithe Y modifiée de structure Faujasite, notamment au moins 20 % en poids par rapport au poids total du matériau composite, comprenant les étapes suivantes :
a) mettre en suspension une zéolithe Y ou un matériau composite la comprenant, notamment en une teneur d'au moins 20 % en poids par rapport au poids total du matériau, avec une solution aqueuse basique comprenant au moins une base forte, notamment NaOH ou de KOH, et/ou faible, en particulier carbonate de sodium, citrate de sodium, par exemple à une concentration allant de 0,001 à 0,5 M, à température ambiante, sous agitation magnétique ou mécanique
b) filtrer la zéolithe obtenue et la laver avec un solvant, notamment un solvant polaire, par exemple de l'eau distillée pure,
c) éventuellement sécher la zéolithe lavée,
d) mettre en contact sous agitation la zéolithe lavée et éventuellement séchée dans une solution, notamment aqueuse, de NH₄NO₃, notamment à une concentration allant de 0,01 à 0,5 M,
e) laver la zéolithe à l'eau distillée jusqu'à pH neutre,
f) calciner la zéolithe obtenue et
g) récupérer la zéolithe.

2. Procédé de préparation selon la revendication 1, **caractérisé en ce que** dans l'étape a) le rapport pondéral solution aqueuse/zéolithe Y est de 20 à 100, notamment de 30 à 80, en particulier de 40 à 60, voire est de 50.

3. Procédé de préparation selon la revendication 1 ou 2, **caractérisé en ce que** dans l'étape d) le rapport pondéral solution de NH4NO3 / zéolithe Y est de 5 à 75, notamment de 10 à 50, en particulier de 20 à 30, voire est de 25.

4. Procédé de préparation selon l'une quelconque des revendications 1 à 3, caractérisé en que le matériau de départ est une zéolithe Y qui a subi au moins un traitement de déalumination, en particulier partielle, par exemple par au moins un traitement acide et/ou à la vapeur.

5. Procédé de préparation selon l'une quelconque des revendications 1 à 4, caractérisé en qu'il comprend en outre une étape de neutralisation de la solution avant la première filtration.

6. Procédé de préparation selon l'une quelconque des revendications 1 à 5, comprenant en outre une étape de fixation d'un catalyseur, notamment d'imprégnation d'un métal catalytique.

7. Zéolithe Y modifiée de structure Faujasite, obtenue par le procédé de préparation selon l'une quelconque des revendications 1 à 6, dont la structure intracristalline présente au moins un réseau de micropores, au moins un réseau de petits mesopores de diamètre moyen de 2 à 5 nm et au moins un réseau de grands mesopores de diamètre moyen de 10 à 50 nm, ces différents réseaux étant interconnectés, la zéolithe modifiée présentant un rapport atomique Si/Al supérieur ou égal à 17, inférieur ou égal 35 et un volume mésoporeux supérieur ou égal à 0,22 ml/g.

8. Zéolithe modifiée selon la revendication 7, dans laquelle le rapport Vs/Vl du volume des petits mesopores (Vs) sur le volume des grands mesopores Vl, est supérieur ou égal à 1, notamment supérieur ou égal à 1,20, voire supérieur ou égal à 1,60, tout particulièrement supérieur ou égal à 1,80, encore plus particulièrement supérieur ou égal à 2.

9. Zéolithe selon l'une quelconque des revendications 7 ou 8, **caractérisée en ce qu'**elle présente un volume mésoporeux total supérieur ou égal à 0,25 ml/g, en particulier supérieur ou égal à 0,35 ml/g, voire supérieur ou égal à 0,40 ml/g.

10. Zéolithe selon l'une quelconque des revendications 7 à 9, **caractérisée** en qu'elle présente un volume microporeux inférieur ou égal à 0,20 ml/g, notamment inférieur ou égal à 0,18 ml/g, en particulier inférieur ou égal à 0,16 ml/g, voire inférieur ou égal à 0,125 ml/g, tout particulièrement inférieur ou égal à 0,10 ml/g.

11. Zéolithe selon l'une quelconque des revendications 7 à 10, **caractérisée** en qu'elle présente un rapport volume mésoporeux total / volume microporeux supérieur ou égal à 1, notamment supérieur ou égal à 1,5, en particulier supérieur ou égal à 3, voire supérieur ou égal à 3,5, tout particulièrement supérieur ou égal à 4, encore plus particulièrement supérieur ou égal à 4,5, voire même supérieur ou égal à 5.

12. Particules, en particulier catalytiques, comprenant la zéolithe selon l'une quelconque des revendications 7 à 11 et au moins un agent liant, comme la silice ou l'alumine.

13. Particules selon la revendication 12, comprenant au moins 20% en poids de zéolithes par rapport au poids total des particules.

14. Particules selon la revendication 12 ou 13, comprenant également un métal catalytique.

15. Utilisation de particules selon l'une des revendications 12 à 14, dans un procédé de traitement du pétrole ou des résidus lourds, notamment en tant que catalyseur d'hydroconversion en FCC, par exemple d'hydrocraquage ou d'hydroisomérisation.

## Patentansprüche

1. Verfahren zur Herstellung von modifiziertem Y-Zeolith mit Faujasit-Struktur oder von Verbundmaterial, das modifizierten Y-Zeolith mit Faujasit-Struktur umfasst, insbesondere mindestens 20 Gew.-% im Verhältnis zum Gesamtgewicht des Verbundmaterials, umfassend die folgenden Schritte:
a) Insuspensionversetzen eines Y-Zeoliths oder eines Verbundmaterials, das ihn umfasst, insbesondere in einem Gehalt von mindestens 20 Gew.-% im Verhältnis zum Gesamtgewicht des Materials, mit einer basischen wässrigen Lösung, die mindestens eine starke Base, insbesondere NaOH oder KOH, und/oder schwache, vor allem Natriumcarbonat, Natriumcitrat umfasst, beispielsweise in einer Konzentration von 0,001 bis 0,5 M, bei Raumtemperatur, unter magnetischem oder mechanischem Rühren,
b) Filtern des erhaltenen Zeoliths und dessen Waschen mit einem Lösungsmittel, insbesondere einem polaren Lösungsmittel, beispielsweise mit reinem destilliertem Wasser,
c) eventuell Trocknen des gewaschenen Zeoliths,
d) Inkontaktversetzen unter Rühren des gewaschenen und eventuell getrockneten Zeoliths in einer insbesondere wässrigen Lösung mit NH₄NO₃, insbesondere in einer Konzentration von 0,01 bis 0,5 M,
e) Waschen des Zeoliths mit destilliertem Wasser bis zu einem neutralen pH,
f) Kalzinieren des erhaltenen Zeoliths und
g) Rückgewinnen des Zeoliths.

2. Herstellungsverfahren nach Anspruch 1, **dadurch gekennzeichnet, dass** in Schritt a) das Gewichtsverhältnis wässrige Lösung/Y-Zeolith von 20 bis 100, insbesondere von 30 bis 80, vor allem von 40 bis 60 beträgt, ja sogar 50 ist.

3. Herstellungsverfahren nach Anspruch 1 oder 2, **dadurch gekennzeichnet, dass** in Schritt d) das Gewichtsverhältnis NH₄NO₃-Lösung/ Y-Zeolith von 5 bis 75, insbesondere von 10 bis 50, vor allem von 20 bis 30 beträgt, ja sogar 25 ist.

4. Herstellungsverfahren nach einem der Ansprüche 1 bis 3, **dadurch gekennzeichnet, dass** das Ausgangsmaterial ein Y-Zeolith ist, der mindestens einer, vor allem teilweisen Dealuminierungsbehandlung unterzogen wurde, beispielsweise durch mindestens eine Behandlung mit Säure und/oder mit Dampf.

5. Herstellungsverfahren nach einem der Ansprüche 1 bis 4, **dadurch gekennzeichnet, dass** es ferner einen Neutralisierungsschritt der Lösung vor der ersten Filtration umfasst.

6. Herstellungsverfahren nach einem der Ansprüche 1 bis 5, umfassend ferner einen Schritt des Fixierens eines Katalysators, insbesondere eines Imprägnierens mit einem katalytischen Metall.

7. Modifizierter Y-Zeolith mit Faujasit-Struktur, erhalten durch das Herstellungsverfahren nach einem der Ansprüche 1 bis 6, dessen interkristalline Struktur mindestens ein Mikroporennetz, mindestens ein Netz kleiner Mesoporen mit einem mittleren Durchmesser von 2 bis 5 nm und mindestens ein Netz mit großen Mesoporen mit einem mittleren Durchmesser von 10 bis 50 nm aufweist, wobei diese verschiedenen Netze miteinander verbunden sind, wobei der modifizierte Zeolith ein Atomverhältnis Si/AL größer oder gleich 17, kleiner oder gleich 35 und ein Mesoporenvolumen von über oder gleich 0,22 ml/g aufweist.

8. Modifizierter Zeolith nach Anspruch 7, wobei das Verhältnis Vs/Vl des Volumens kleiner Mesoporen (Vs) zum Volumen der großen Mesoporen Vl größer oder gleich 1, insbesondere größer oder gleich 1,20, sogar größer oder gleich 1,60, spezieller größer oder gleich 1,80, noch spezieller größer oder gleich 2 ist.

9. Zeolith nach einem der Ansprüche 7 oder 8, **dadurch gekennzeichnet, dass** er ein Mesoporenvolumen insgesamt von über oder gleich 0,25 ml/g, vor allem über oder gleich 0,35 ml/g, ja sogar über oder gleich 0,40 ml/g aufweist.

10. Zeolith nach einem der Ansprüche 7 bis 9, **dadurch gekennzeichnet, dass** er ein Mikroporenvolumen von unter oder gleich 0,20 ml/g, insbesondere unter oder gleich 0,18 ml/g, vor allem unter oder gleich 0,16 ml/g, ja sogar unter oder gleich 0,125 ml/g, speziell unter oder gleich 0,10 ml/g aufweist.

11. Zeolith nach einem der Ansprüche 7 bis 10, **dadurch gekennzeichnet, dass** er ein Verhältnis Mesoporenvolumen insgesamt/Mikroporenvolumen größer oder gleich 1, insbesondere größer oder gleich 1,5, vor allem größer oder gleich 3, ja sogar größer oder gleich 3,5, speziell größer oder gleich 4, noch spezieller größer oder gleich 4,5, ja sogar selbst größer oder gleich 5 aufweist.

12. Partikel, vor allem katalytische, umfassend Zeolith nach einem der Ansprüche 7 bis 11 und mindestens ein Bindemittel wie Siliziumoxid oder Aluminiumoxid.

13. Partikel nach Anspruch 12, umfassend mindestens 20 Gew.-% Zeolithe im Verhältnis zum Gesamtgewicht der Partikel.

14. Partikel nach Anspruch 12 oder 13, umfassend ebenfalls ein katalytisches Metall.

15. Verwendung von Partikeln nach einem der Ansprüche 12 bis 14 in einem Verfahren zur Verarbeitung von Erdöl oder schweren Rückständen, insbesondere als FCC-Hydrokonversions-, beispielsweise Hydrocracking- oder Hydroisomerisierungskatalysator.

## Claims

1. Method for preparing modified Y-type zeolite having a Faujasite structure or composite material, comprising modified Y-type zeolite of Faujasite structure, particularly at least 20% by weight with respect to the total weight of composite material, comprising the following steps:
a) suspending a Y-type zeolite or a composite material comprising same, particularly at a content of at least 20% by weight with respect to the total weight of the material, with a basic aqueous solution comprising at least one strong base, particularly NaOH or KOH, and/or weak base, in particular sodium carbonate, sodium citrate, for example at a concentration ranging from 0.001 to 0.5 M, at ambient temperature, under magnetic or mechanical stirring
b) filtering the zeolite obtained and washing it with a solvent, particularly a polar solvent, for example pure distilled water,
c) optionally drying the washed zeolite,
d) contacting the washed and optionally dried zeolite under stirring in a solution, particularly aqueous, of NH₄NO₃, particularly at a concentration ranging from 0.01 to 0.5 M,
e) washing the zeolite with water until neutral pH,
f) calcining the zeolite obtained and
g) recovering the zeolite.

2. Preparation method according to claim 1, **characterised in that** in step a) the aqueous solution/Y-type zeolite weight ratio is from 20 to 100, particularly from 30 to 80, in particular from 40 to 60, or is 50.

3. Preparation method according to claim 1 or 2, **characterised in that** in step d) the NH4NO3 solution/Y-type zeolite weight ratio is from 5 to 75, particularly from 10 to 50, in particular from 20 to 30, or is 25.

4. Preparation method according to any one of claims 1 to 3, **characterised in that** the starting material is a Y-type zeolite which has undergone at least one, particularly partial, dealumination treatment, for example with an acid and/or steam treatment.

5. Preparation method according to any one of claims 1 to 4, **characterised in that** it further comprises a step of neutralising the solution before the first filtration.

6. Preparation method according to any one of claims 1 to 5, **characterised in that** it further comprises a step of fixing a catalyst, particularly of impregnating a catalytic metal.

7. Modified Y-type zeolite having a Faujasite structure, obtained with the preparation method according to any one of claims 1 to 6, the intracrystalline structure of which has at least one network of micropores, at least one network of small mesopores having a mean diameter from 2 to 5 nm and at least one network of large mesopores having a mean diameter from 10 to 50 nm, these different networks being interconnected, the modified zeolite having an Si/Al atomic ratio greater than or equal to 17, less than or equal to 35 and a mesoporous volume greater than or equal to 0.22 ml/g.

8. Modified zeolite according to claim 7, wherein the ratio Vs/Vl of the volume of the small mesopores (Vs) over the volume of the large mesopores Vl is greater than or equal to 1, particularly greater than or equal to 1.20, or greater than or equal to 1.60, very particularly greater than or equal to 1.80, more particularly greater than or equal to 2.

9. Zeolite according to any one of claims 7 or 8, **characterised in that** it has a total mesoporous volume greater than or equal to 0.25 mg/g, in particular greater than or equal to 0.35 ml/g, or greater than or equal to 0.40 ml/g.

10. Zeolite according to any one of claims 7 to 9, **characterised in that** it has a microporous volume less than or equal to 0.20 ml/g, particularly less than or equal to 0.18 ml/g, in particular less than or equal to 0.16 ml/g, or less than or equal to 0.125 ml/g, very particularly less than or equal to 0.10 ml/g.

11. Zeolite according to any one of claims 7 to 10, **characterised in that** it has a total mesoporous volume/microporous volume ratio greater than or equal to 1, particularly greater than or equal to 1.5, in particular greater than or equal to 3, or even greater than or equal to 3.5, very particularly greater than or equal to 4, more particularly greater than or equal to 4.5, or even greater than or equal to 5.

12. Particles, particularly catalytic, comprising the zeolite according to any one of claims 7 to 11 and at least one binding agent, such as silica or alumina.

13. Particles according to claim 12, comprising at least 20% by weight of zeolites with respect to the total weight of the particles.

14. Particles according to claim 12 or 13, also comprising a catalytic metal.

15. Use of particles according to one of claims 12 to 14, in a method for treating petroleum or heavy residues, particularly as an FCC hydroconversion, for example hydrocracking or hydroisomerisation, catalyst.
